# EUROPEAN PATENT APPLICATION

(11) **EP 3 151 383 A1**
(43) Date of publication of application: **05.04.2017**
(21) Application number: 16190507.0
(22) Date of filing: 23.09.2016
(51) Int. Cl.: H02K 1/18, H02K 7/116, E05F 15/689, H02K 1/14, H02K 5/24

(54) **VEHICLE WINDOW DRIVING MECHANISM AND VEHICLE UTILIZING THE SAME**

(30) Priority: 30.09.2015 CN 201510642609
(71) Applicant: Johnson Electric S.A., 3280 Murten (CH)
(72) Inventor: Li, Yue, Hong Kong (HK); Zhou, Chui You, Hong Kong (HK); Wang, Yong, Hong Kong (HK); Li, Yong, Hong Kong (HK)
(74) Representative: Hocking, Adrian Niall

(57) **Abstract**

A vehicle window driving mechanism (1) and a vehicle (3) utilizing the vehicle window driving mechanism (1) are provided. The vehicle window driving mechanism (1) includes a box (21), a motor (100) mounted to the box (21), and a transmission assembly (400) mounted to the box (21) and connected to the motor (100). The motor (100) is a single phase permanent magnet brushless motor. The vehicle window driving mechanism (1) has a relatively smaller size.

## Description

### FIELD OF THE INVENTION

The present invention relates to a vehicle window driving mechanism, and a vehicle utilizing the same.

### BACKGROUND OF THE INVENTION

Open and close of a vehicle window is usually achieved by a vehicle window driving mechanism. The vehicle window driving mechanism generally includes a box, and a motor and a transmission assembly disposed in the box. When rotating, the motor drives the vehicle window to open or close through the transmission assembly. However, the traditional motor for driving the vehicle window to move is typically a brush motor which has a relatively independent structure, e.g. the motor includes an outer housing and a stator, a rotor and brushes disposed in the outer housing. Therefore, the motor has a relative large size. In addition, when the motor is connected to the outer housing of the box, it results in a large overall size of the vehicle window driving mechanism, thus occupying a large mounting space.

### SUMMARY OF THE INVENTION

Accordingly, there is a desire for a vehicle window driving mechanism with reduced size and a vehicle utilizing the vehicle window driving mechanism.

In one aspect, a vehicle window driving mechanism is provided which includes a box, a motor mounted to the box, and a transmission assembly disposed on the box and connected to the motor. The motor is a single phase permanent magnet brushless motor.

Preferably, the motor comprises a stator core, a winding wound around the stator core, and a rotor, the box defines a receiving chamber, and the motor is at least partially received in the receiving chamber of the box.

Preferably, the vehicle window driving mechanism further comprises a cover body covering an open end of the receiving chamber of the box, wherein the stator core and the winding are at least partially received in the cover body.

Preferably, the cover body comprises an accommodating portion and a connecting flange disposed at a distal end of the accommodating portion, the motor is at least partially received in the accommodating portion, a buffering member is disposed between the accommodating portion and the motor, and the connecting flange is fixedly connected to the box.

Preferably, the buffering member comprises a sleeve portion attached around the motor and a buffering portion disposed on the sleeve portion, and the buffering portion is disposed between the sleeve portion and the accommodating portion of the cover body.

Preferably, a structure of the buffering portion comprises at least one type of elongated buffering protrusions, ball-shaped buffering protrusions, cylindrical buffering protrusions, circular truncated cone-shaped buffering protrusions, and prism-shaped buffering protrusions.

Preferably, the buffering member further comprises a retaining portion, the retaining portion is a flange disposed at one end of the sleeve portion, and when the cover body covers on the box, the retaining portion is sandwiched between the cover body and the box.

Preferably, the box comprises a first receiving portion and a second receiving portion, the receiving chamber is disposed in the first receiving portion, the second receiving portion defines a receiving slot in communication with the receiving chamber, and the transmission assembly is disposed in the receiving slot and driven by the rotor of the motor.

Preferably, the rotor comprises a rotary shaft rotatably connected to the box, the transmission assembly comprises a first transmission member, a second transmission member, and an output member that are sequentially coupled, the first transmission member is connected to the rotary shaft, the second transmission member is received in the receiving slot and coupled between the first transmission member and the output member, and the output member is configured to couple to an external device to drive the external device to move.

Preferably, the first transmission member is a worm, the second transmission member is a worm gear, the output member is an output gear driven by the worm gear, and the box is a gearbox.

Preferably, the stator core comprises a stator yoke and two stator teeth, the stator yoke comprises two opposite first sidewalls and two opposite second sidewalls connected between the first sidewalls, the two stator teeth are coupled to the first sidewalls respectively, and the winding is wound around the two stator teeth.

Preferably, a maximal distance between outer surfaces of the two first sidewalls is greater than a maximal distance between outer surfaces of the two second sidewalls.

Preferably, each stator tooth comprises a winding portion and two pole shoes, the winding portion is connected to the first sidewall, the two pole shoes are coupled to one end of the winding portion away from the first sidewall and faces toward the rotor, and the winding comprises two coils each wound around the winding portion of one of the stator teeth.

Preferably, one side of each second sidewall facing toward the rotor forms two extensions, one end of each extension away from the second sidewall extends in a direction away from the second sidewall and away from the other extension, the pole shoes and the extensions cooperatively define a receiving space in which the rotor is received.

Preferably, one side of the pole shoe facing toward the rotor defines a recess, and one side of the two extension of each second sidewall facing toward the rotor defines a recess.

Preferably, the pole shoe and the extension are interrupted by an opening.

Preferably, the rotor comprises a rotary shaft rotatably connected to the box and four permanent magnetic poles, and the four permanent magnetic poles are alternatively disposed along a circumferential direction of the rotor.

Preferably, outer surfaces of the permanent magnetic poles are located on a concentric circular arc surface.

In another aspect, a vehicle window driving mechanism is provided which includes a box, a motor mounted to the box, and a transmission assembly mounted to the box and coupled to the motor. The motor is a single phase permanent magnet brushless motor. The transmission assembly is configured to be driven by the motor.

In another aspect, a vehicle is provided which includes a vehicle window and a vehicle window driving mechanism as described above. The motor is connected to the vehicle window through the transmission assembly and is capable of driving the vehicle window to move.

In the above vehicle window driving mechanism, the motor is a single phase permanent magnet brushless motor which has a relatively smaller size and light weight in comparison with the traditional motor. As such, the vehicle window driving mechanism has a relatively smaller overall size and lighter overall weight.

### BRIEF DESCRIPTION OF THE DRAWINGS

Fig. 1 is a perspective view of a vehicle window driving mechanism according to one embodiment of the present invention.
Fig. 2 is an exploded, perspective view of the vehicle window driving mechanism of Fig. 1.
Fig. 3 is a sectional view of the vehicle window driving mechanism of Fig. 1.
Fig. 4 is an enlarged view of the portion IV of the vehicle window driving mechanism of Fig. 3.
Fig. 5 is a perspective view of a driving assembly of the vehicle window driving mechanism of Fig. 2.
Fig. 6 is an exploded, perspective view of the driving assembly of Fig. 5.
Fig. 7 is a cross-sectional view of the driving assembly of Fig. 5.
Fig. 8 is a sectional view of the vehicle window driving mechanism of Fig. 1, viewed from another direction.
Fig. 9 is a perspective view of a buffering member of the vehicle window driving mechanism of Fig. 2.
Fig. 10 illustrates the vehicle window driving mechanism of Fig. 1 used in a vehicle.

### DETAILED DESCRIPTION OF THE PREFERRED EMBODIMENTS

The technical solutions of the embodiments of the present invention will be clearly and completely described as follows with reference to the accompanying drawings. Apparently, the embodiments as described below are merely part of, rather than all, embodiments of the present invention. Based on the embodiments of the present disclosure, any other embodiment obtained by a person skilled in the art without paying any creative effort shall fall within the protection scope of the present invention.

It is noted that, when a component is described to be "fixed" to another component, it can be directly fixed to the another component or there may be an intermediate component. When a component is described to be "connected" to another component, it can be directly connected to the another component or there may be an intermediate component. When a component is described to be "disposed" on another component, it can be directly disposed on the another component or there may be an intermediate component. The directional phraseologies such as "perpendicular", "horizontal", "left", "right" or similar expressions are for the purposes of illustration only.

Unless otherwise specified, all technical and scientific terms have the ordinary meaning as understood by people skilled in the art. The terms used in this disclosure are illustrative rather than limiting. The term "and/or" as used in this disclosure means that each and every combination of one or more associated items listed are included.

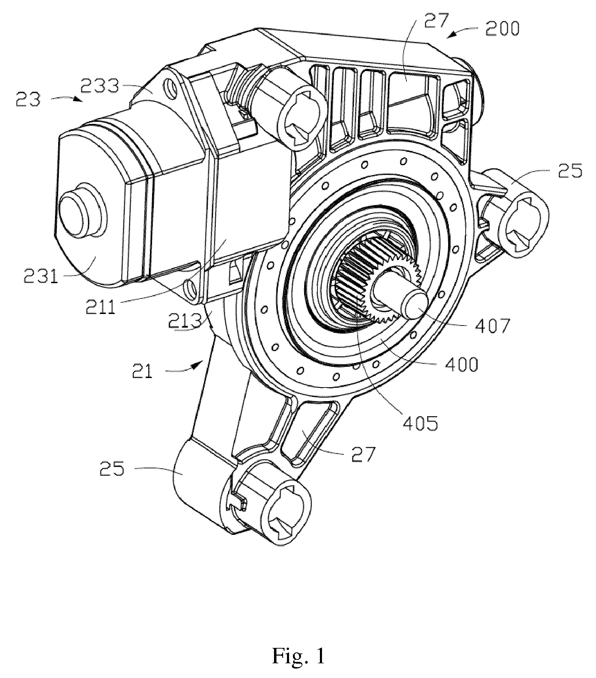

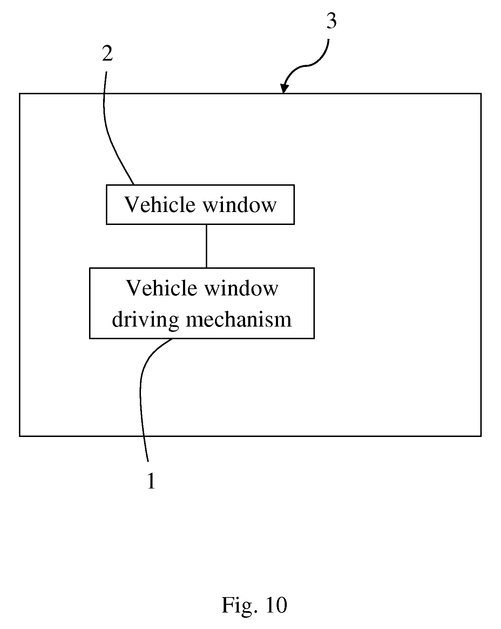

Referring to Fig. 1, a vehicle window driving mechanism 1 in accordance with one embodiment of the present invention is used to drive an external device to rotate or drive the external device to translate through a transmission mechanism. In particular, the vehicle window driving mechanism 1 may be a vehicle window lifting mechanism, and the external device may be a vehicle window 2 (as shown in Fig. 10). By controlling the vehicle window driving mechanism 1 to operate, the vehicle window 2 can be driven to open or close. Alternatively, the external device may be another movable device such as a wheel of a toy car or fan blades, which will be described in detail below.

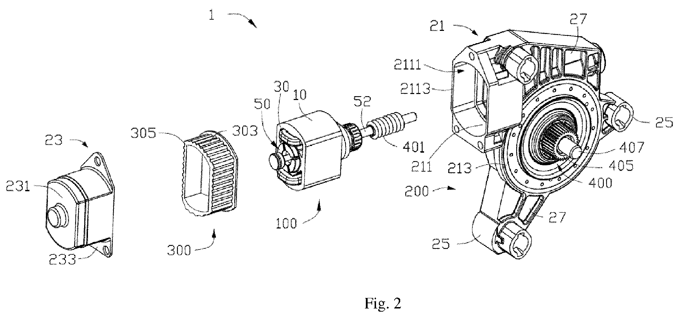

Referring to Fig. 2, the vehicle window driving mechanism 1 includes a driving assembly 100, a mounting assembly 200, a buffering member 300, and a transmission assembly 400. In this illustrated embodiment, specifically, the driving assembly 100, the buffering member 300 and the transmission assembly 400 are all disposed on the mounting assembly 200. The transmission assembly 400 is connected to the driving assembly 100. The mounting assembly 200 is configured to mount the vehicle window driving mechanism 1 to the external device, for allowing the driving assembly 100 to drive the external device to move through the transmission assembly 400. The buffering member 300 is disposed between the driving assembly 100 and the mounting assembly 200. The buffering member 300 is used to buffer vibrational impact between the driving assembly 100 and the mounting assembly 200 to prevent the vehicle window driving mechanism 1 from being damaged due to the vibrations, and reduce operational noises of the vehicle window driving mechanism 1.

The mounting assembly 200 includes a box 21, a cover body 23, and mounting portions 25. In the illustrated specific embodiment, the cover body 23 covers on the box 21, and the mounting portions 25 are connected to the box 21.

In this embodiment, the box 21 is a gearbox, which receives the driving assembly 100 and the transmission assembly 400. The box 21 includes a first receiving portion 211 and a second receiving portion 213 disposed adjacent to the first receiving portion 211.

The first receiving portion 211 defines a generally column shaped receiving chamber 2111 for receiving the driving assembly 100. The receiving chamber 2111 includes an opening 2113. The receiving chamber 2111 communicates with the outside environment via the opening 2113.

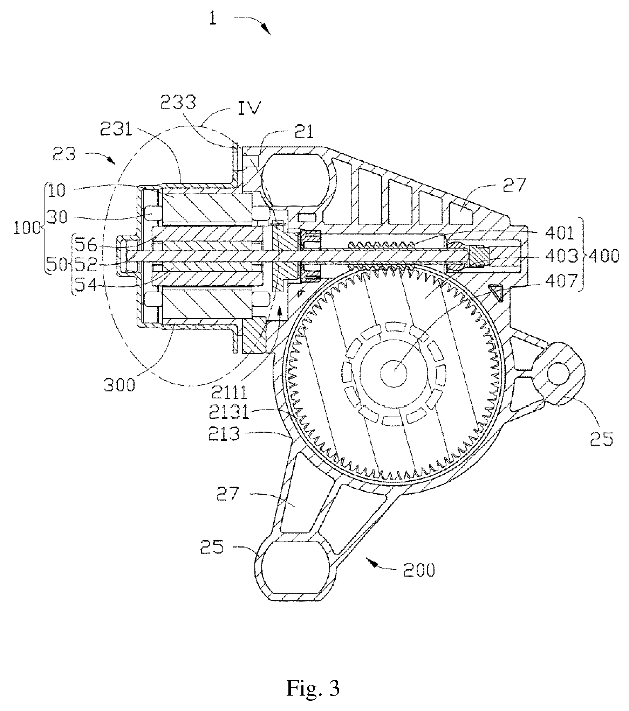

Referring to Fig. 3, the second receiving portion 213 defines a receiving slot 2131 that is generally circular disc-shaped, for receiving the transmission assembly 400. The receiving slot 2131 communicates with the receiving chamber 2111 at one side of the receiving slot 2131, for allowing the transmission assembly 400 to engage with the driving assembly 100 at this communication area between the receiving slot 2131 and the receiving chamber 2111.

The cover body 23 covers the opening 2113 and is detachably connected to the box 21. The cover body 23 is used to close the receiving chamber 2111, such that the receiving chamber 2111 and the receiving slot 2131 are substantially isolated from the outside environment to achieve a dustproof seal. The cover body 23 includes an accommodating portion 231 and a connecting flange 233 coupled to the receiving portion 231.

In this embodiment, the accommodating portion 231 is generally barrel shaped with a bottom wall, and is formed with an accommodating space for receiving the driving assembly 100. The connecting flange 233 is disposed on one end of the accommodating portion 231 away from the bottom wall and is generally in the shape of a flange. The connecting flange 233 is used to connect to the box 21. When the cover body 23 covers on the box 21, the accommodating portion 231 communicates with the receiving chamber 2111, and the accommodating portion 231 and the receiving chamber 2111 cooperatively receive the driving assembly 100.

In this embodiment, the number of the mounting portions 25 is three. The three mounting portions 25 are spaced and disposed around the second receiving portion 213. The mounting portions 25 are used to connect to the external device so as to mount the vehicle window driving mechanism 1 to the external device.

Further, in order to reasonably reduce the overall weight of the mounting assembly 200 while ensuring a certain rigidity of the mounting assembly 200, part of the material of the box 21 and/or the mounting portions 25 are removed to form a plurality of spaced weight-reduction sections 27 arranged on the box 21 and/or the mounting portions 25. In this embodiment, the weight-reduction sections 27 are structures with through holes passing through the box 21 and/or the mounting portions 25. It should be understood that the weight-reduction sections 27 may also be structures with grooves defined in the box 21 and/or the mounting portions 25.

Referring again to Fig. 2, in this embodiment, the driving assembly 100 is a motor. Preferably, the driving assembly 100 is single phase permanent magnet brushless motor. The driving assembly 100 is partially received in the receiving chamber 2111, for driving the transmission assembly 400 to move which further drives the external device to move.

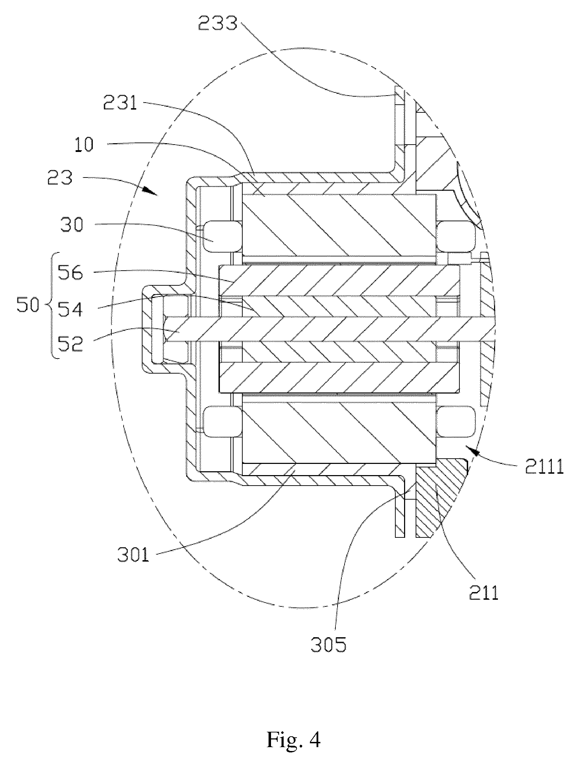

Referring to Fig. 4, a large part of the driving assembly 100 is received in the accommocating portion 231 of the cover body 23, and the cover body 23 covers on the box 21 and is fixedly connected to the box 21, such that the vehicle window driving mechanism 1 overall has a smaller size, and the size of the external device utilizing the vehicle window driving mechanism 1 can therefore be reduced.

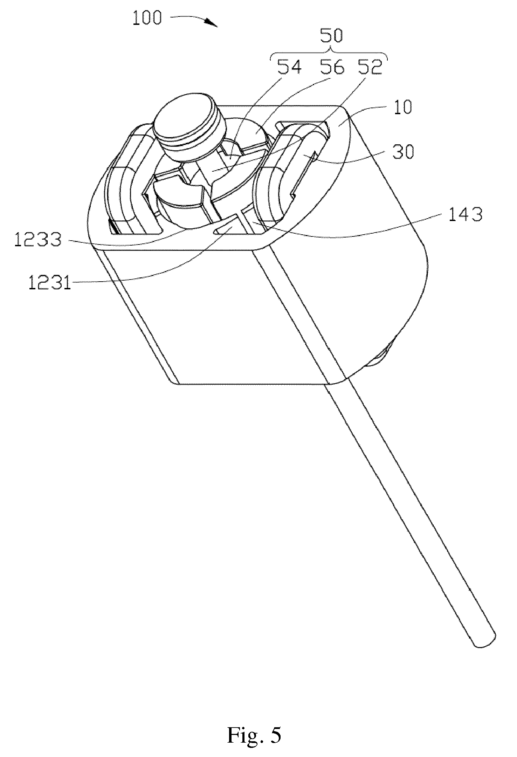

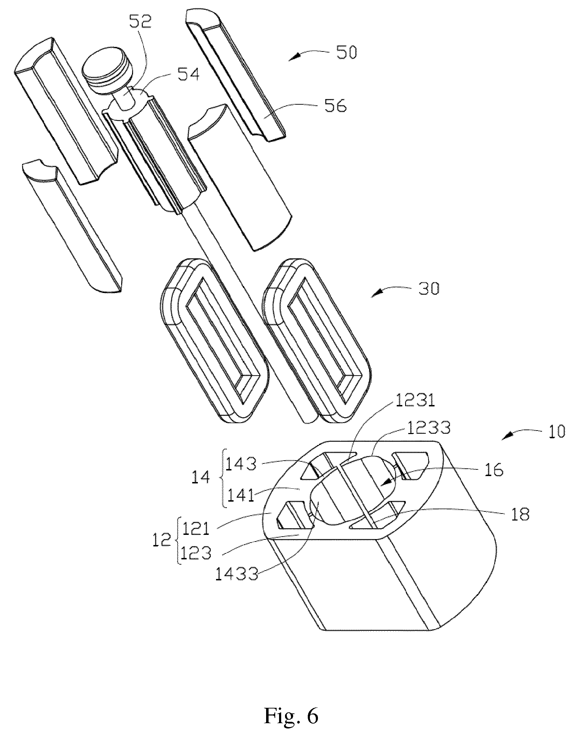

Referring to Fig. 5 and Fig. 6, the driving assembly 100 includes a stator core 10, a winding 30, and a rotor 50. In the illustrated specific embodiment, the driving assembly 100 is an inner rotor motor, the stator core 10 is disposed in the cover body 23, the winding 30 is wound around the stator core 10, the rotor 50 is rotatably received in the stator core 10 and connected to the transmission assembly 400.

The stator core 10 includes a stator yoke 12 and stator teeth 14. In the illustrated specific embodiment, the stator teeth 14 is coupled to the stator yoke 12. The stator yoke 12 is fixedly connected within the accommodating portion 231 of the cover body 23. As a result, an outer housing assembly of a traditional motor is omitted from the driving assembly 100. That is, a part of the cover body 23 forms the outer housing of the motor, which further reduces the size and weight of the external device utilizing the vehicle window driving mechanism 1.

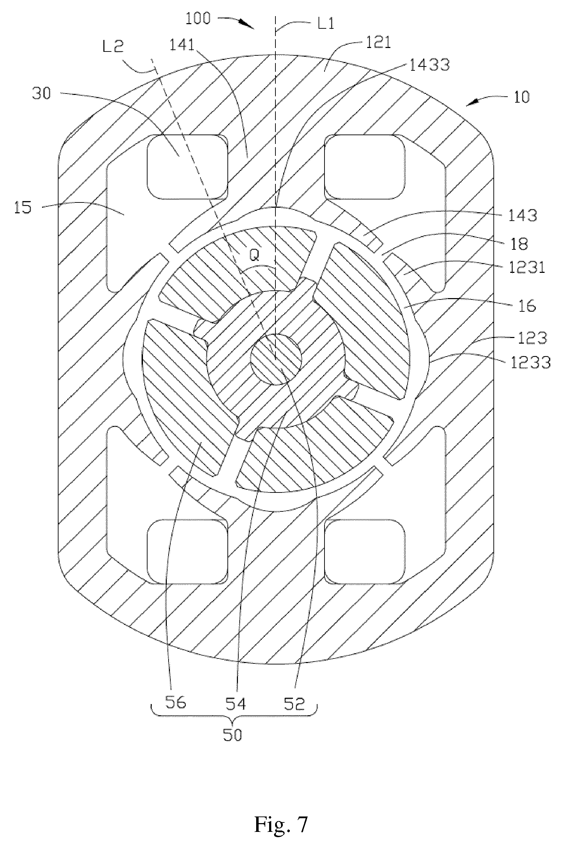

Referring also to Fig. 7, which is a cross-sectional view of the driving assembly 100 according to one embodiment of the present invention. The cross-section as used in this disclosure refers to an axial section, i.e. a section formed by a plane cutting through the driving assembly 100, wherein the plane is perpendicular to the rotary shaft of the driving assembly 100. A cross-section of the stator yoke 12 is substantially in the shape of a closed rectangle, and an outer profile of the cross-section of the stator yoke 12 is substantially in the shape of a circle with two opposite sides cut out. The stator yoke 12 includes two arcutate first sidewalls 121 and two flat second sidewalls 123. The two first sidewalls 121 are disposed opposing to each other, the two second sidewalls 123 are disposed opposing to each other, and two sides of each second sidewall 123 are connected to the two first sidewalls 121, respectively, such that the cross-section of the stator yoke 12 is in the shape of a continuously closed ring.

In this embodiment, specifically, outer circumferential surfaces of the first sidewalls 121 are substantially a part of a cylindrical surface. Inner surfaces of the first sidewalls 121 are substantially flat surfaces and, therefore, each first sidewall 121 has a thickness that gradually decreases from a middle to two ends of the first side wall 121. An outer circumferential surface of each second sidewall 123 is substantially a flat surface. Preferably, a maximal distance between the outer circumferential surfaces of the two first sidewalls 121 is greater than a maximal distance between the outer circumferential surfaces of the two second sidewalls 123.

A middle of an inner surface of each second sidewall 123 forms two extensions 1231 extending along a circumferential direction of the rotor 50 toward middle portions of the two first sidewalls 121, respectively. The extensions 1231 are used to conduct magnetic flux and assist the stator teeth 14 to form magnetic flux loops. An outer profile of cross-sections of the two extensions 1231 is substantially V-shaped or arc-shaped.

In this embodiment, the number of the stator teeth 14 is two. The stator teeth 14 are connected to the inner surfaces of the first sidewalls 121, respectively, for allowing the winding 30 to be wound thereon.

In the illustrated embodiment, specifically, each stator tooth 14 is substantially Y-shaped, including a winding portion 141 and two pole shoes 143. The winding portion 141 extends radially inwardly from a middle of the inner surface of the first sidewall 121. The two pole shoes 143 are disposed at one end of the winding portion 141 away from the corresponding first sidewall 121.

In this embodiment, the two pole shoes 143 of each stator tooth 14 extend from a distal end of the winding portion 141 along a circumferential direction of the rotor 50, toward two adjacent extensions 1231 at opposite sides of the winding portion 141, respectively, such that an outer profile of cross-sections of the two pole shoes 143 is substantially V-shaped or arc-shaped, and hence the two pole shoes 143 and the winding portion 141 cooperatively form the Y-shaped profile of the stator tooth 14. The pole shoes 143 can prevent the winding 30 from falling off the winding portion 141 and, at the same time, can be used to conduct magnetic flux.

Further, a distal end of each pole shoe 143 is close to a distal end of an adjacent extension 1231 of the adjacent second sidewall 123. As a result, the pole shoes 143 of the stator teeth 14 and the extensions 1231 cooperatively form a receiving space 16 for receiving the rotor 50 therein. At the same time, each pole shoe 143, the extension 1231 adjacent the pole shoe 143 and the stator yoke 12 cooperatively form a receiving slot 15 for receiving the winding 30 therein.

Further, the distal end of each pole shoe 143 and the distal end of the extension 1231 adjacent the pole shoe 143 are spaced by a preset distance to form an opening 18, thereby reducing magnetic leakage. It should be understood that the distal ends of the extension 1231 adjacent pole shoe 143 can also be connected by a magnetic bridge with a large magnetic reluctance.

The rotor 50 is rotatably received in the stator core 10. In the illustrated embodiment, specifically, the rotor 50 includes a rotary shaft 52, a rotor core 54, and permanent magnet members 56. The rotor core 54 is disposed around the rotary shaft 52, and the permanent magnet members 56 are disposed around the rotor core 54. It should be understood that the permanent magnet members 56 can also be directly fixed to the rotary shaft 52.

Referring again to Fig. 3, in this embodiment, the rotary shaft 52 is generally a cylindrical shaft which is rotatably disposed in the box 21. The rotary shaft 52 defines an axis coaxial with an axis of the stator core 10 and extending toward the receiving slot 2131. The rotary shaft 52 is used to connect to the transmission assembly 400 and drive the transmission assembly 400 to move.

The rotor core 54 is fixedly attached around the rotary shaft 52 and is received in the receiving space 16.

Preferably, an outer circumferential surface of each permanent magnet member 56 away from the rotor core 54 is located on a same cylindrical surface centered at the center of the rotor 50, such that an outer profile of cross sections of the permanent magnet members 56 is generally circular-shaped.

Further, an inner surface of a connection area of the two pole shoes 143 of each stator tooth 141 is formed with a recess 1433, and a connection area of the two extensions 1231 of each second sidewall 123 is formed with a recess 1233. The inner surfaces of the pole shoes 143 of the stator teeth 14 and the extensions 1231 of the second sidewalls 123 of the stator core 10 are located on a same cylindrical surface centered at the center of the rotor 50, except for the parts of the recesses 1233, 1433. As such, the stator and the rotor form therebetween a substantially even air gap. That is, the air gap is even, except for the portions corresponding to the recesses 1233, 1433, the openings 18 and opening slots between adjacent permanent magnet members 56.

In this embodiment, the presence of the recesses 1433, 1233 makes a pole axis L2 of the rotor 50 offset from an pole axis L1 of the stator by a certain angle. An included angle Q between the rotor pole axis and the stator pole axis is referred as a startup angle. Preferably, the recesses 1433, 1233 are aligned with centers of the stator teeth 14 and the middles of joints of the extensions 1231 of the corresponding second sidewalls 123, respectively, such that the startup angle Q is equal to or close to a 90-degree electric angle, which makes the rotor 50 easily achieve bidirectional startup. By altering the direction of the electric current in the winding 30, the startup direction of the rotor 50 can be changed.

It should be understood that the positions of the recesses 1433, 1233 can be changed depending upon design requirements. For example, the recesses 1433, 1233 are all offset from the centers of the stator teeth 14 and the middles of joints of the extensions 1231 of the corresponding second sidewalls 123 along a clockwise direction or a counter-clockwise direction, such that the rotor 50 starts easier in one direction than in the other direction.

In this embodiment, there are four permanent magnet members 56. The four permanent magnet members 56 are fixedly disposed on an outer circumferential surface of the rotor core 54 and are spaced along the circumferential direction of the rotor core 54. Each permanent magnet member 56 forms one permanent magnetic pole, and each two adjacent permanent magnet members 56 have opposite polarities. The winding 30 includes two coils respectively wound around the two stator teeth 14. Each coil is wound around the winding portion 141 of one corresponding stator tooth 14 after passing through the corresponding receiving slot 15. When an electric current flows through the winding 30, the energized winding 30 produces an induction magnetic field. Magnetic fluxes produced by each energized coil flow from the pole shoes 143 of the corresponding stator tooth 14, enter the rotor 50 through an air gap between the pole shoes 143 and the rotor 50, and then go back to the stator tooth 14 through the extensions 1231 of the two second sidewalls 123 adjacent to the pole shoes 143 and the corresponding first sidewall 121 to thereby form magnetic flux loops. That is, the magnetic fluxes produced by each energized coil go sequentially through the winding portion 141, the two corresponding pole shoes 143, the air gap between the pole shoes 143 and the rotor 50, the rotor 50, the air gap between two of the extensions 1231 adjacent to the two pole shoes 143 and the rotor 50, the two adjacent extensions 1231, and the stator yoke 12 to form two closed magnetic flux loops. Therefore, in this embodiment, upon being energized, the two coils can form four magnetic flux loops, i.e. forming a four-pole motor. The extensions 1231 of the two second sidewalls 123 form two auxiliary poles. In comparison with the traditional two-pole motor (no auxiliary poles are formed on the stator), the present invention reduces the magnetic path and magnetic reluctance, thereby increasing the output power of the driving assembly 100.

It should be understood that the outer surfaces of the four permanent magnet members 56 shall not be limited to the concentric circular arc surfaces as described above. For example, the outer surfaces of the four permanent magnet members 56 may be eccentric circular arc surfaces. For example, the outer surface of each permanent magnet member 56 is spaced from the center of the rotor 50 by a distance that progressively decreases in a circumferential direction of the rotor 50 from a middle to two ends of the outer surface and is symmetrical with respect to a center line of the outer surface, such that the outer surface of each permanent magnetic pole and the stator form therebetween an uneven air gap that is substantially symmetrical with respect to the center line of the outer surface.

Preferably, the driving assembly 100 is a single phase permanent magnet brushless motor. Therefore, the above driving assembly 100 is a four-pole single phase permanent magnet brushless motor. Because the single phase permanent magnet brushless motor includes only two opposite stator teeth 14, and the two coils are respectively disposed on the two stator teeth 14, when the distance between the two first sidewalls 121 of the stator yoke 12 is fixed, the distance between the two second sidewalls 123 may be set to be relatively smaller. Therefore, with the overall size of the single phase brushless motor being reduced, the overall weight of the vehicle window driving mechanism 1 is also reduced, and the output power of the single phase brushless motor is relatively greater. In addition, when the single phase brushless motor is disposed in the cover body 23, an outer iron housing of the traditional motor is omitted, which further reduces the space occupied by the motor, such that the overall size of the vehicle window driving mechanism 1 is relatively smaller. Furthermore, the outer shape of the motor of the embodiment of the present invention is substantially rectangular or elongated circular, with its width (i.e. the size of one pair of opposite sides) being less than its length (i.e. the size of the other pair of opposite sides). The outer shape of the motor matches with the shape of the receiving chamber 2111 of the box 21. In the vehicle window driving mechanism 1 as configured above, the box 21 has a low profile structure (a size in a direction perpendicular to the second sidewall 123 of the motor is obviously less than a size in a direction parallel to the second sidewall 123), which is particularly suitable for use in applications with low profile space such as vehicle window lifting mechanism.

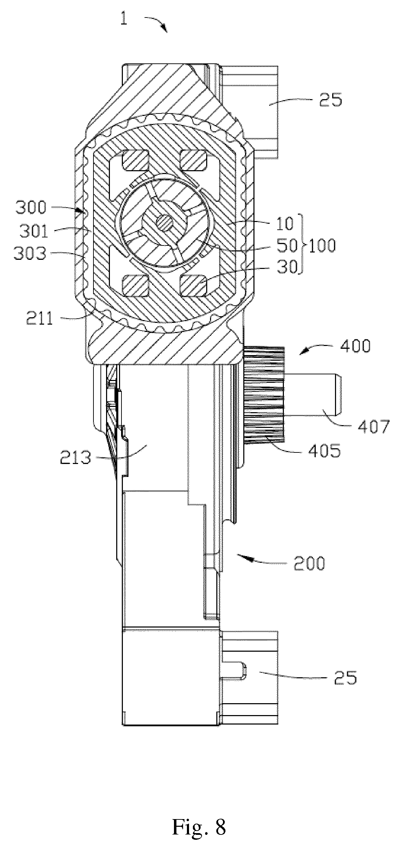

Referring also to Fig. 8, the buffering member 300 is disposed between the stator core 10 and the accommodating portion 231. The buffering member 300 is used to buffer external vibrations applied to the driving assembly 100 and absorb the vibrations caused by the driving assembly 100 during operation, such that the vehicle window driving mechanism 1 overall has a small amount of vibrations, thus reducing the operational noises of the vehicle window driving mechanism 1.

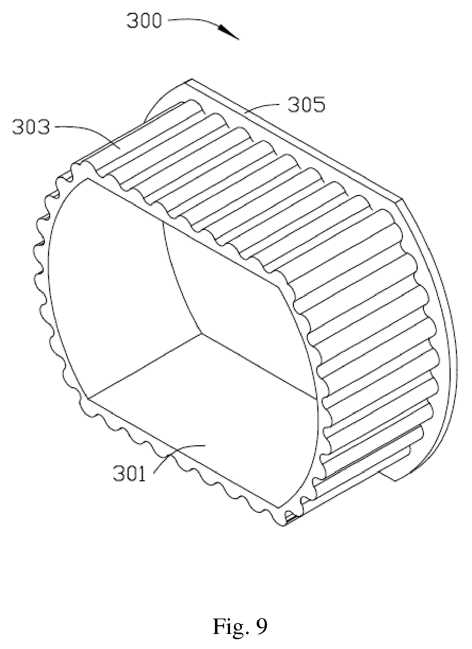

Referring to Fig. 9, a profile of the buffering member 300 substantially matches with the outer profile of the stator core 10, and the buffering member 300 is attached around the stator core 10. When the stator core 10 and the buffering member 300 are received in the accommodating portion 231, a sidewall of the accommodating portion 231 applies a precompression force to the buffering member 300, such that the stator core 10 of the driving assembly 100 can be firmly mounted in the cover body 23.

The buffering member 300 includes a sleeve portion 301, a buffering portion 303, and a retaining portion 305. In the illustrated specific embodiment, the buffering portion 303 and the retaining portion 305 are both disposed on the sleeve portion 301.

The sleeve portion 301 is of a generally ring-shaped column structure, which sleeves around an outer circumference of the stator core 10.

In this embodiment, the buffering portion 303 is a plurality of buffering protrusions. The buffering protrusions are disposed on an outer circumference of the sleeve portion 301 and spaced along a circumferential direction of the sleeve portion 301. Each buffering protrusion is a substantially elongated protrusion which protrudes from a surface of the sleeve portion 301 and extends along an axial direction of the sleeve portion 301. The buffering protrusions surround an outer circumferential surface of the sleeve portion 301, which makes an outer profile of a cross-section of the buffering member 300 is substantially wave-shaped, thus providing sufficient space for deformation of the buffering member 300 and hence enhancing the buffering and damping results of the buffering member 300. It should be understood that the extending direction of the buffering protrusions shall not be limited to the axial direction of the sleeve portion 301 as described above. The extending direction of the buffering protrusions may also be at an angle relative to the axis of the sleeve portion 301, or the buffering protrusions may be curvedly formed on the outer circumferential surface of the sleeve portion 301. It should also be understood that the shape of the protrusions shall not be limited to the elongated protrusion as described above, which can also be of another structure. For example, the buffering protrusions may be configured to be a ball-shaped, circular truncated cone-shaped, cylindrical, cubic, or prism-shaped buffering protrusion, as long as the buffering protrusions are spaced on the outer circumferential surface of the sleeve portion 301 to provide sufficient space for deformation of the buffering member 300. Alternatively, the buffering protrusions may be configured to have a combination of the above shapes, as long as the buffering protrusions are spaced on the outer circumferential surface of the sleeve portion 301 to provide sufficient space for deformation of the buffering member 300.

The retaining portion 305 is substantially in the form of a flange, which has an outer diameter size greater than an outer diameter size of the sleeve portion 301 and the buffering portion 303. The retaining portion 305 is retained on a side of the connecting flange 233 of the cover body 23 facing the box 21. When the stator core 10 and the buffering member 300 are received in the accommodating portion 231 and the cover body 23 is connected to the box 21, the retaining portion 305 is sandwiched between the connecting flange 233 and the box 21 (Fig. 4) to achieve energy absorption and vibration damping between the cover body 23 and the box 21 and, as the same time, achieve dustproof seal function. Preferably, the connecting flange 233 of the cover body 23 is connected to the box 21 through a thread connection piece and exerts a precompression force to the retaining portion 305, such that the buffering member 300 and the driving assembly 100 can be firmly mounted to the box 21.

The buffering member 300 is directly disposed between the stator core 10 and the cover body 23, which can effectively buffer the vibrations produced by the driving assembly 100 during operation and facilitates the overall assembly of the vehicle window driving mechanism 1.

Referring again to Fig. 2 and Fig. 3, the transmission assembly 400 is disposed in the second receiving portion 213 and connected to the rotary shaft 52. The transmission assembly 400 is used to connect to the external device and drive the external device to move.

The transmission assembly 400 includes a first transmission member 401, a second transmission member 403, and an output member 405. In the illustrated specific embodiment, the first transmission member 401 is disposed on the rotary shaft 52, the second transmission member 403 is disposed within the second receiving portion 213 and connected to the first transmission member 401, and the output member 405 is driven by the second transmission member 403.

In this embodiment, the transmission assembly 400 is a worm/worm gear mechanism. The first transmission member 401 is a worm, the second transmission mechanism 403 is a worm gear, and the output member 405 is an output gear. Specifically, the first transmission member 401 is fixedly disposed on the rotary shaft 52 and can rotate relative to the mounting assembly 200 along with the rotary shaft 52. The second transmission assembly 403 is rotatably disposed in the second receiving portion 213 and engaged with the first transmission member 401. Two gear portions of a double gear form the worm gear 403 and the output member 405, respectively. The double gear is capable of rotation about a support shaft 407. The support shaft 407 can be fixed to the box 21, and the output member 405 passes through the box 21 and protrudes to the outside environment. The output member 405 is used to connect to the external device. When the rotary shaft 52 of the driving assembly 100 rotates, the rotary shaft 52 drives the second transmission member 403 to rotate through the first transmission member 401, such that the output member 405 drives the external device to rotate. The output member 405 can engage with a portion (such as a gear rack) of the external device, for allowing the driving assembly 100 to drive the external device to move through the transmission assembly 400.

It should be understood that the transmission assembly 400 shall not be limited to the worm/worm gear structure as described above, which can also be of another transmission structure. For example, the transmission assembly 400 may be a gear train transmission mechanism. The gear train is disposed in the box 21 and connected to the rotary shaft 52 to transmit the movement of the driving assembly 100 to the external device. Alternatively, the transmission assembly 400 may be a gear and rack transmission mechanism, a belt and gear transmission mechanism or another type of transmission mechanism, as long as the driving assembly 100 can drive the external device to move through the transmission mechanism.

Referring to Fig. 10, the vehicle window driving mechanism 1 provided by the embodiment of the present invention can be utilized in a vehicle 3 to drive a part of the vehicle 3 to move. The vehicle 3 may include a vehicle body, a door disposed on the vehicle body, and a vehicle window 2 disposed on the door. The vehicle window driving mechanism 1 is disposed within the vehicle door and connected to the vehicle window 2 through the transmission assembly 400. Preferably, the output member 405 of the transmission assembly 400 is connected to the vehicle window 2 through another transmission part (such as a gear rack), so as to convert the rotation of the driving assembly 100 into translation of the vehicle window 2. Controlling the rotation of the driving assembly 100 can control upward or downward movement of the vehicle window 2 relative to the vehicle door, thus opening or closing the vehicle window 2. Because the vehicle window driving mechanism 1 of the present invention has the advantages of small size and lightweight, it occupies a smaller mounting space within the vehicle door and can be firmly mounted. In this embodiment, other structures of the vehicle are known structures, which are not described herein in detail.

A driving mechanism having the same structure with the vehicle window driving mechanism 1 provided by the embodiment of the present invention can also be utilized in another type of movable device to drive the movable device itself or/and drive a part of the movable device to move.

For example, the driving mechanism may be utilized in a remote-controlled vehicle. The driving mechanism is connected to a wheel of the remote-controlled vehicle to drive the wheel to rotate, thus driving the remote-controlled vehicle to move. Because the driving mechanism of the present invention has the advantages of small size and lightweight, it occupies a small mounting space within the remote-controlled vehicle and can be firmly mounted. In this embodiment, other structures of the remote-controlled vehicle are known structures, which therefore are not described herein in detail. Alternatively, the driving mechanism may be also utilized in a fan blade driving system of a device such as a fan or a heat sink, which are not described herein one by one.

Although the invention is described with reference to one or more embodiments, the above description of the embodiments is used only to enable people skilled in the art to practice or use the invention. It should be appreciated by those skilled in the art that various modifications are possible without departing from the spirit or scope of the present invention. The embodiments illustrated herein should not be interpreted as limits to the present invention, and the scope of the invention is to be determined by reference to the claims that follow.

## Claims

1. A vehicle window driving mechanism (1) comprising:
a box (21);
a motor (100) mounted to the box (21), the motor (100) being a single phase permanent magnet brushless motor; and
a transmission assembly (400) mounted to the box (21) and coupled to the motor (100), configured to be driven by the motor (100).

2. The vehicle window driving mechanism (1) of claim 1, wherein the motor (100) comprises a stator core (10), a winding (30) wound around the stator core (10), and a rotor (50), the box (21) defines a receiving chamber (2111), and the motor (100) is at least partially received in the receiving chamber (2111) of the box (21).

3. The vehicle window driving mechanism (1) of claim 2, further comprising a cover body (23) covering an open end of the receiving chamber (2111) of the box (21), wherein the stator core (10) and the winding (30) are at least partially received in the cover body (23).

4. The vehicle window driving mechanism (1) of claim 3, wherein the cover body (23) comprises an accommodating portion (231) and a connecting flange (233) disposed at a distal end of the accommodating portion (231), the motor (100) is at least partially received in the accommodating portion (231), a buffering member (300) is disposed between the accommodating portion (231) and the motor (100), and the connecting flange (233) is fixedly connected to the box (21).

5. The vehicle window driving mechanism (1) of claim 4, wherein the buffering member (300) comprises a sleeve portion (301) attached around the motor (100) and a buffering portion (303) disposed on the sleeve portion (301), and the buffering portion (303) is disposed between the sleeve portion (301) and the accommodating portion (231) of the cover body (23).

6. The vehicle window driving mechanism (1) of claim 5, wherein the buffering member (300) further comprises a retaining portion (305), the retaining portion (305) is a flange disposed at one end of the sleeve portion (301), and when the cover body (23) covers on the box (21), the retaining portion (305) is sandwiched between the cover body (23) and the box (21).

7. The vehicle window driving mechanism (1) of any one of claims 2-6, wherein the box (21) comprises a first receiving portion (211) and a second receiving portion (213), the receiving chamber (2111) is disposed in the first receiving portion (211), the second receiving portion (213) defines a receiving slot (2131) in communication with the receiving chamber (2111), and the transmission assembly (400) is disposed in the receiving slot (2131) and driven by the rotor (50) of the motor (100).

8. The vehicle window driving mechanism (1) of claim 7, wherein the rotor (50) comprises a rotary shaft (52) rotatably connected to the box (21), the transmission assembly (400) comprises a first transmission member (401), a second transmission member (403), and an output member (405) that are sequentially coupled, the first transmission member (401) is connected to the rotary shaft (52), the second transmission member (403) is received in the receiving slot (2131) and coupled between the first transmission member (401) and the output member (405), and the output member (405) is configured to couple to an external device to drive the external device to move.

9. The vehicle window driving mechanism (1) of any one of claims 2-8, wherein the stator core (10) comprises a stator yoke (12) and two stator teeth (14), the stator yoke (12) comprises two opposite first sidewalls (121) and two opposite second sidewalls (123) connected between the first sidewalls (121), the two stator teeth (14) are coupled to the first sidewalls (121) respectively, and the winding (30) is wound around the two stator teeth (14).

10. The vehicle window driving mechanism (1) of claim 9, wherein a maximal distance between outer surfaces of the two first sidewalls (121) is greater than a maximal distance between outer surfaces of the two second sidewalls (123).

11. The vehicle window driving mechanism (1) of any one of claims 9-10, wherein each stator tooth (14) comprises a winding portion (141) and two pole shoes (143), the winding portion (141) is connected to the first sidewall (121), the two pole shoes (143) are coupled to one end of the winding portion (141) away from the first sidewall (121) and faces toward the rotor (50), and the winding (30) comprises two coils each wound around the winding portion (141) of one of the stator teeth (14).

12. The vehicle window driving mechanism (1) of claim 11, wherein one side of each second sidewall (123) facing toward the rotor (50) forms two extensions (1231), one end of each extension (1231) away from the second sidewall (123) extends in a direction away from the second sidewall (123) and away from the other extension (1231), the pole shoes (143) and the extensions (1231) cooperatively define a receiving space (16) in which the rotor (50) is received.

13. The vehicle window driving mechanism (1) of any one of claims 9-12, wherein the rotor (50) comprises a rotary shaft (52) rotatably connected to the box (21) and four permanent magnetic poles, and the four permanent magnetic poles are alternatively disposed along a circumferential direction of the rotor (50).

14. A driving mechanism comprising: a mechanism having the same structure with the vehicle window driving mechanism (1) of any one of claims 1-13.

15. A vehicle (3) comprising: a vehicle window (2); and the vehicle window driving mechanism (1) of any one of claims 1-13, wherein the motor (100) of the vehicle window driving mechanism (1) is connected to the vehicle window (2) through the transmission assembly (400) and is capable of driving the vehicle window (2) to move.
